# EUROPÄISCHE PATENTSCHRIFT

(11) **EP 2 010 898 B1**
(45) Veröffentlichungstag und Bekanntmachung des Hinweises auf die Patenterteilung: **09.11.2011**
(21) Anmeldenummer: 07724680.9
(22) Anmeldetag: 27.04.2007
(51) Int. Cl.: G01N 27/416, G01N 27/28

(54) **TRANSPORTBEHÄLTER FÜR MEHRERE POTENTIOMETRISCHE SENSOREN**
TRANSPORT CONTAINER FOR A PLURALITY OF POTENTIOMETRIC SENSORS
CONTENANT DE TRANSPORT POUR PLUSIEURS CAPTEURS POTENTIOMÉTRIQUES

(30) Priorität: 27.04.2006 DE 102006020248
(43) Veröffentlichungstag der Anmeldung: 07.01.2009
(73) Patentinhaber: Endress+Hauser Conducta Gesellschaft für Mess- und Regeltechnik mbH+Co. KG, 70839 Gerlingen (DE)
(72) Erfinder: BABEL, Wolfgang, 71263 Weil der Stadt (DE); WITTMER, Detlev, 75433 Maulbronn (DE); HEISTERKAMP, Monika, 71254 Ditzingen (DE)
(74) Vertreter: Andres, Angelika Maria
(86) Internationale Anmeldenummer: PCT/EP2007/003753
(87) Internationale Veröffentlichungsnummer: WO 2007/124932

(56) Entgegenhaltungen:
- DE-A1- 10 205 253
- DE-A1- 10 218 606
- DE-A1- 10 344 262

## Beschreibung

Die vorliegende Erfindung betrifft einen Transportbehälter für potentiometrische Sensoren, insbesondere pH-Sensoren, mit einem integrierten Mikrocontroller mit Datenspeicher. Derartige Sensoren können im Labor vorkalibriert, regeneriert oder gereinigt und später am Einsatzort ausgetauscht werden

Zu den Sensoren ist weiterhin folgendes anzumerken. In der Regel sind die Sensoren mit einem Leitsystem verbunden, an das die Messdaten verschiedener Sensoren weitergeleitet werden. Aufgrund der Verbindung mit dem Leitsystem werden die Sensoren auch häufig auch als Transmitter bezeichnet. Die Kommunikation mit dem Leitsystem erfolgt nach einem der in der Prozessautomatisierungstechnik üblichen Standards, wie z. B. HART Datenübertragung oder einem Feldbussystem (Foundation Fieldbus, Profibus etc.). Neben diesen offenen Übertragungssystemen werden bei der digitalen Datenübertragung auch teilweise proprietäre Protokolle eingesetzt, dies insbesondere bei peer-to-peer Verbindungen zwischen Transmitter und Leitsystem.
Zum Teil sind die Sensoren aus zwei Komponenten aufgebaut, einem Sensorkopf und einem dazu passenden Steckergegenstück. Das an einer Messstelle vorgesehene Steckergegenstück ist fest mit dem Leitsystem verbunden, der Sensorkopf kann abgenommen werden. Diese Zweiteilung ist insbesondere bei Sensoren von Vorteil, die regelmäßig gewartet werden müssen. Zur Reinigung oder zur Kalibrierung kann der Sensorkopf einfach an der Messstelle abgenommen werden, um in ein Labor transportiert zu werden. Einen derartigen zweiteiligen Sensor bietet die Anmelderin (Endress + Hauser Conducta) unter dem Produktnamen Memosens an. Dieses Produkt wird seit dem Jahr 2004 auch von der Anmelderin vertrieben.

Problematisch bei derartigen Sensoren ist, dass nach dem Reinigen bzw. nach dem Kalibrieren der richtige Sensorkopf an der richtigen Messstelle wieder eingesetzt wird. Häufig führt der Anwender eine Box mit einem Satz von mehreren Sensorköpfen mit sich, aus dem der richtige Sensorkopf für die betreffende Messstelle ausgewählt werden muss. Hierzu sind die Sensorköpfe mit der Messstellenbezeichnung (TAG-Name) beschriftet, um dem Anwender die Zuordnung Sensorkopf Messstelle zu erleichtem.
Aufgrund der manuellen Tätigkeit des Anwenders sind jedoch Verwechslungen nicht auszuschließen. Eine Verwechslung kann schwerwiegende Folgen haben.
So darf ein Messkopf, der an einer Cyanid-Messtelle eingesetzt war, unter keinen Umständen an einer Lebensmidel-Messstelle eingesetzt werden.
Ein falsch eingesetzter Messkopf kann z. B. zu Verunreinigungen des zu messenden Produktes führen und damit einen Verarbeitungsschritt des produkts empfindlich beeinträchtigen.

Da der Transmitter mit einem Leitsystem verbunden ist, kann im Leitsystem überprüft werden, ob der richtige Sensorkopf an der Messstelle eingesetzt wurde. Dies ist möglich, well vom Leitsystem aus, die Kennung des Sensorkopfs an der betreffenden Messstelle abgefragt werden kann. Weist der Sensorkopf an der betreffenden Mossstelle eine falsche Kennung auf, wird dies entsprechend angezeigt Diese Art der Überprüfung ist aber bei Sätzen von ca. 20 Sensorköpfen äußerst zeitaufwendig, da der Anwender Jedes Mal das Leitsystem aufsuchen muss, um den richtigen Einsatz eines Sensorkopfs zu überprüfen.

Alle bisher bekannte Prüfverfahren bergen mögliche Fehlerquellen, die ein absolut zuverlässiges Einsetzen der Sensorköpfe an der richtigen Messstelle nicht gewährleisten.
Zukünftig soll der Austausch der Messköpfe eine Routinetätigkeit sein, die nicht unbedingt von Fachpersonal durchgeführt werden muss. Dadurch werden noch höhere Anforderungen an den sicheren Austausch gestellt.

Die Offenlegungsschrift DE 10344262 A1 offenbart ein Steckmodul für einen Flüssigkeits- oder Gassensor, der aus einem Sensormodul SM und einem Sensormodulkopf SMK aufgebaut ist, die steckbar miteinander verbindbar sind und die im zusammengesetzten Zustand einen Daten- und Energieaustausch über eine galvanisch entkoppelte Übertragungsstrecke ermöglichen, wobei das Steckmodul ST1 mit dem Sensormodul SM verbindbar ist und eine Anzeigeeinheit aufweist, die zur Anzeige von im Sensormodul SM gespeicherten Sensordaten dient, oder wobei das Steckmodul ST1 mit dem Sensormodul SM verbindbar ist und eine Funkeinheit aufweist, die zur Übertragung von im Sensormodul SM gespeicherten Sensordaten dient.

Die Offenlegngsschrift DE 10205253 A1 offenbart ein Verfahren zur Überwachung von Containern auf ihrem Reiseweg vom Versender zum Empfänger auf dem Land-, Luft- und Seeweg, wobei die Container mit einem Adapter in der Art eines Bluetooth-Adapters ausgestattet werden, der digitale Signale senden und empfangen kann und darüber hinaus mit Sensoren gekoppelt ist, die Einflussgrössen erfassen, (z. B. die Temperatur in einem Kühlcontainer, ob die Containertüren geöffnet werden, mit welcher Beschleunigung ein Container beim Kranen abgesetzt wurde usw.), wobei die Adapter der einzelnen Container auch untereinander Signale weitergeben können, wobei Access-Points an Transportwegen von Containern, an Containerfahrzeugen, an Bord von Containerschiffen, an Kaianlagen usw. installiert werden, die mit den Adaptern und auch mit einer Datenverarbeitungsanlage Signale über ein Netz (Internet, Intranet usf.) austauschen, und wobei eine Datenverarbeitungsanlage ortsfest beim Versender oder einem anderen Unternehmen und/oder an Bord eines Schiffes installiert ist und in ihr Grenzwerte für Einflussgrössen gespeichert sind, um Vergleiche anzustellen, Berechnungen durchzuführen und Aktivitäten vor Ort zu veranlassen.

Wenngleich die vorgenannten Offenlegungsschriften Einzelheiten zum mobilen bzw. autonomen Betrieb von Sensoren offenbaren, leisten sie keinen Beitrag zum Problem eines sicheren Austauschs von Sensoren.

Aufgabe der Erfindung ist es deshalb, eine Transportbox für Sensoren bereitzustellen, wobei insbesondere ein sicherer Austausch von Sensoren gewährleistet ist.

Die Aufgabe wird erfindungsgemäß gelöst durch die Transportbox gemäß dem unabhängigen Patentanspruch 1.

Die gattungsgemäßen Sensoren weisen die folgenden Eigenschaften auf:
1. Die induktive, kontaktlose und leicht zu bedienende Verbindung zwischen Sensor und Kabel: Dadurch gibt es keine Probleme mehr mit Feuchtigkeit, Regen, Schnee, Korrosion oder Masseschleifen.
2. Das digitale Interface mit definierten Signalpegeln: Dieses löst bisher vorhandene Probleme bezüglich Kabel und Hochohmigkeit sowie der störbehafteten.Signalübertragung. Ferner ermöglicht es lange störsichere Übertragungsstrecken zwischen Sensor und Transmitter trotz unter Umständen vorhandener Störungen durch andere elektrische Installationen.
3. Der integrierte Mikrocontroller mit Speicher zur Erfassung aller aktueller Prozess- und Messgrößen: Dieser ermöglicht erst, dass alle relevanten, den Sensor betreffenden Behandlungsmaßnahmen wie Kalibration und Justage, Regeneration oder Reinigung im Labor durchgeführt werden können und vor Ort nur noch vorkalibrierte Sensoren auszutauschen sind. Darüber hinaus ermöglicht er die Kontrolle der Alterung des Sensors, der Wartung nach Bedarf (abweichen zum statischen Wartungsplan) sowie der Erfassung benutzerdefinierter Stresszustände für den Sensor, die wiederum auf die Standzeit und den Lebenszyklus des Sensors Einfluss haben.

Sensoren mit diesen Eigenschaften werden Nachfolgend als Memosens-Sensoren bezeichnet.

Bei herkömmlichen Sensoren ohne integrierten Mikrokontroller werden Inspektion, Wartung, Reparatur und Austausch von Standardsensoren in der Regel an den Messstellen durch pH-Spezialisten ausgeübt, die von Kalibrationspufferlösungen bis zum Reinigungmittel alles mit sich führen müssen.

Die Memosens-Sensoren erlauben es dagegen, dass diese Tätigkeiten in einem Labor unter definierten Umgebungsbedingungen erfolgen, da direkt an der pH-Messstelle nur noch ein Austausch von kalibrierten Sensoren, auch durch nicht spezialisiertes Einsatzpersonal, erfolgen kann. Das bedeutet einen gravierenden Umbruch mit immensen Kosteneinsparungen. Dies führt zu einer neuen Service-Strategie für online pH-Messsysteme, welche die bisher akuten Probleme der gesamten Messstrecke Sensor - Stecker - Kabel - Transmitter mit allen seinen bekannten Problemen und Nachteilen löst. Allerdings benötigt ein derartige Strategieveränderung auch ein intelligentes Datenmanagement, auf das im Folgenden näher eingegangen werden soll: Die Aufgabenstellung erfordert, dass prozessrelevante Sensoren nach der Kalibration immer wieder unverwechselbar und eindeutig an den selben Transmitter angeschlossen werden, von dem sie zur Katibration entfernt wurden.

Beim jeweiligen Austausch muss dabei davon ausgegangen werden, dass die den Sensortausch ausführenden Mitarbeiter in der Regel mehrere dieser Sensoren für unterschiedliche Messstellen bei einem Rundgang mit sich führen.

Der Ablauf stellt sich so dar:

### 1. Schritt: Anlieferung

Normalerweise werden dem Anwender die Memosens-Sensoren vom Hersteller angeliefert und er legt diese nach Zubuchung von Seriennummer und Sensortyp auf Lager.

### 2. Schritt: Erstinbetriebnahme im Labor

Wird nun ein neuer Sensor in der Anlage für eine Messstelle mit einer Identität bzw. TAG-Nummer AX benötigt, so wird dieser Sensor aus dem Lager entnommen und im Labor zunächst an einen mit einer Memosens-Datenbank versehenen PC, angeschlossen. Automatisch werden nun über die Schnittstelle des Sensors, die im Sensor gespeicherten Daten in die Datenbank überspielt und visualisiert. Der Lebenszyklus des Sensors in der Anlage beginnt.

Das Datenfeld könnte folgendes Aussehen haben: 1. TAG-Nummer der Messstelle, 2. Seriennummer, 3. Sensortyp 4. Erstkalibrationsdaten mit Uhrzeit und Datum, 5. Sensordaten (z.B. Steilheit, Nullpunkt und Temperatur)

Bevor nun der erste Check durchgeführt werden kann, muss der Anwender dem Sensor die TAG-Nummer der Messstette zuweisen, an welcher der Sensor zum Einsatz kommt - im o.g. Fall also die TAG-Nummer AX. Diese TAG-Nummer wir in den Sensor eingespeichert.

Der Anwender bringt nun die TAG-Nummer AX am Sensorstecker mit einem gegen Entfernung gesichertem Mechanismus an. Somit ist der Sensor eindeutig gekennzeichnet. Nun kann der eigentliche Check in einer definierten Kalibrationsflüssigkeit durchgeführt werden. Das aktuelle Ergebnis wird datenbankkonform, wiederum mit Datum und Uhrzeit, abgespeichert.

Sollte zu diesem Zeitpunkt eine Kalibration entsprechend der Benutzerdefinition erforderlich sein, wird dies auf dem Bildschirm angezeigt und der Kalibrationsvorgang kann erfolgen. Die neuen Daten werden ebenfalls automatisch in der Datenbank eingetragen, wodurch eine lückenlose Sensorhistorie realisiert wird. Weitere für den späteren Einsatz unter dem Gesichtspunkt der Advanced Diagnostic relevanten Sensordaten können zu diesem Zeitpunkt ebenfalls in die Datenbank eingegeben werden.

Der Sensor kann nun an der Messstelle in seine Armatur mit der TAG-Nummer AX eingebaut und an das Liquiline mit der TAG-NummerAX angeschlossen werden. Nach Verbindung mit dem Messwertümformer synchronisiert sich der Sensor automatisch - insbesondere auch mit allen relevanten Daten im Sinne von Predicitve Maintenance - und der Messvorgang beginnt. Sollte es dennoch einmal passieren, dass ein falscher Sensor angeschlossen worden ist, so wird dies angezeigt und der Messvorgang kann nicht begonnen werden. Aktuell definierte Messdaten bezüglich der Einsatzdauer werden im Sensor permanent mitgeführt und abgespeichert: Eine derartige Messgröße ist bei einer pH-Elektrode beispielsweise, wie lange eine benutzerdefinierte Temperatur überschritten worden ist.
Durch Advanced Diagnostic können z.B. statistische Aussagen über die Lebensdauer eines Sensors gemacht werden oder zu weichem Zeitpunkt eine weitere Kalibration ansteht.

### Rekatibration im Labor

Bedingt durch seinen Einsatz wird ein pH-Sensor früher oder später rekalibriert werden müssen. Dies kann zyklisch durch prozessspezifisch festgelegte Zeitintervalle oder auch azyklisch auf in Memosens und Liquiline ablaufenden Algorithmen der Predicitve Maintenance erfolgen. In diesem Fall wird der mit einem unverlierbaren TAG versehene Sensor der Messstelle AX durch einen weiteren im Labor vorkalibrierten Sensor, ebenfalls mit dem unverlierbaren TAG Nummer AX gekennzeichnet, an der Messstelle ausgetauscht. Der Sensor wird neben anderen in das Labor gebracht. Zum Zeitpunkt der-Kalibration wird nun der Sensor mit dem TAG AX an die E+H-Datenbank angeschlossen. In diesem Fall synchronisiert er sich mit dieser automatisch und überträgt alle während des Einsatzes im Memosens-Stecker abgespeicherten Daten in die Datenbank. Die Kalibration kann nun durchgeführt werden und die neuen Daten werden mit Datum und Uhrzeit sowohl In der Datenbank in sequentieller Weise als auch im Sensor abgespeichert. Somit entsteht über die Zeit gesehen eine lückenlose Dokumentation der Sensorhistorie mit dem TAG AX.

Insofern, als ein Service-Mitarbeiter oft mehrere Sensoren auszutauschen und zu platzierten hat, ist eine eineindeuttge Zuordnung zwischen Sensoren und Messstellen durch deutlich sichtbar gemachte TAG-Nummem sicherzustellen.

Hierzu kann der TAG folgendermaßen angeordnet bzw. ausgestattet sein:
1: an der Elektrode als
   Clip auf dem Steckkopf
   RFID
   Stegel mit Kalibrierdaten, Datum, Tag-Nr.
2: an der Armatur als
   Schild mit Tag-Nummer,
   RFID
3: am Kabel als
   Kabel-Anhänger,
   RFID mit fester Seriennummer und Tag-Zuordnung über Datenbank
   RFID mit tag-Nummer In RFD
   Nahbereichsfunk
   Einem Stecker mit digitalem Display der nach Aufstecken auf das. Kabel die Messtellenidentität ausliest und anzeigt.
4: am Messumformer der Messstelle als
   Aufkleber, Talg-schild
   am Display des Messumformers auslesbar
   über Kommunikation / DD / DTM

Gesetz den Fall, dass der Service-Mitarbeiter beim Rundgang mehrere. Dutzend Sensoren tauschen muss, stellt sich die Frage, wie er aus der Menge zielgerichtet den jeweiligen mit dem passenden Messsiellen-Tag findet. Hierzu ist die folgende Ausgestaltung von der Erfindung umfasst:

Elektroden stecken in einer Transportbox, die diese versorgt
a: Mit Handheld gewünschte Tag-Nr. an Transport-Box kommunizieren;
   Transport-Box meldet an Handheld die Steckposition der Elektrode in der Transport-Box oder signalisiert die Steckposition z.B. über LED
b: Transport-Box meldet auf Anfrage von Handheld alle vorhandenen Tag-Nummem. Auswahl am Handheld, dann wie a:
c: Gesuchte Tag-Nr. wird aus Kabel ausgelesen, z.B. über RFID, und an Transport-Box weitergegeben; dann wie a:

Diese varianten sollen nun näher erläutert werden.

Ein Memosens-Sensor hat in der Regel keine eigene Energieversorgung sondern wird über seine induktive Kommunikationsschnittstelle zugleich gespeist .

Die erfindungsgemäße Transportbox umfasst insofern einen Energiespeicher, beispielsweise eine Batterie, eine Vielzahl von Sensoraufnahmen mit Schnittstellen zu jeweils einem Memosens-Sensor, eine Nahfunk-Schnittstelle, einen Mikroprozessor zur Steuerung der Kommunikation mit den einzelnen Schnittstellen und der Nahfunk-Schnittstelle. Ggf. ist jeder Sensoraufnahme eine Leuchtdiode zugeordnet, oder sofern die Sensoren in einer zweidimensionalen Matrix angeordnet sind, ggf, jeder Reihe und Spalte jeweils eine Leuchtdiode zugeordnet.

Ein Handheld umfasst eine Nahfunkschnittstelle und ein Display, auf dem die ausgelesenen Daten darstellbar sind.

Die Erfindung wird nun Anhand eines in der Zeichnung dargestellten Ausführungsbeispiels erläutert. Es zeigt:

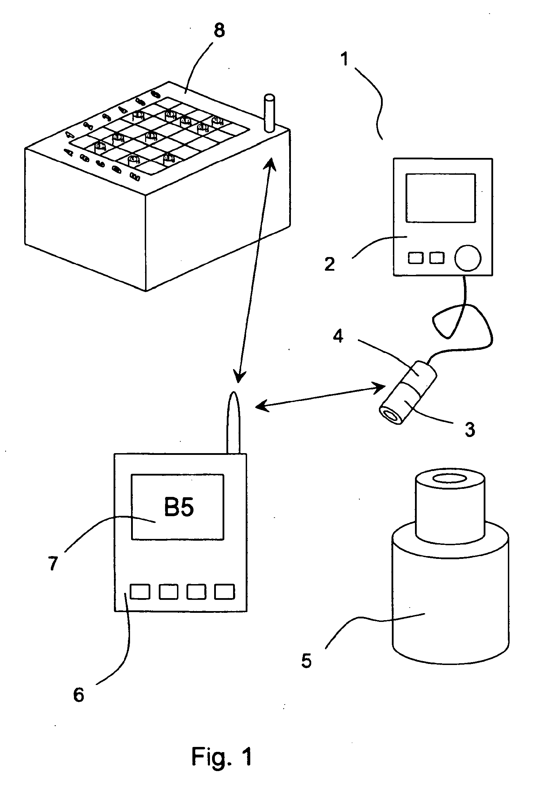

- Fig.1:: Eine erfindungsgemäße Transportbox im Einsatz.

In Fig. 1 ist eine Messstelle 1 dargestellt, welche einen Messumformer 2 aufweist, an den über ein induktiv koppelndes Kabel 3, welches mit einem ersten RFID-Tag 4 versehen ist, ein für die Messstelle geeigneter pH-Sensor angeschlossen werden soll, um damit ein Prozessmedium in einem Behälter 5 zu überwachen.

Um einen für die Messstelle vorgesehenen pH-Sensor zu identifizieren, wird mit einem Bediengerät (Handheld) der RFID-Tag 4 des Kabels ausgelesen, wodurch die Messstellenidentität bekannt ist. Mit dieser Information richtet das Bediengerät 6 über Nahfunk eine Anfrage an einen Transportbehälter 8, welcher ein Feld von Sensorsteckplätzen enthält, wobei jeder Steckplatz eine induktive Schnittstelle enthält um die eingesteckten Sensoren mit Energie zu speisen und z.B. Identitätsdaten mit diesen auszutauschen.

Auf die Anfrage des Bediengerätes identifiziert der Transportbehälter 8 den passenden Sensor und meldet dessen Position im Transportbehälter beispielsweise als Koordinaten an das Bediengerät welches die Koordinaten auf einem Bildschirm 7 anzeigt. Ergänzend oder als Altenative dazu kann der Transportbehälter die Position durch eine dem Sensorsteckplatz zugeordnete Leuchtdiode signalisieren.

## Patentansprüche

1. Transportbox (8) für den Transport einer Vielzahl von Memosens-Sensoren zu Messstellen, wobei die Memosens-Sensoren jeweils individuelle Tag-Nummern aufweisen, wobei die Transportbox umfasst:
einen Energiespeicher,
eine Nahfunk-Schnittstelle,
eine Vielzahl von geordneten Sensoraufnahmen mit induktiven Schnittstellen zu jeweils einem Memosens-Sensor,
einen Mikroprozessor zur Steuerung der Kommunikation mit den einzelnen Schnittstellen und der Nahfunk-Schnittstelle, wobei
die Transportbox eingerichtet ist, die Position eines Memosens-Sensors in der Transportbox zu identifizieren, wenn die TAG-Nr. dieses Sensors angefragt wird, und die identifiziert Position zu signalisieren und/oder über die Nahfunk-Schnittstelle zu melden.

2. Transportbox nach Anspruch 1, wobei den Sensoraufnahmen oder bei einer matrixförmigen Anordnung der Sensoraufnahmen den Reihen und Spalten von Sensoraufnahmen Leuchtdioden zugeordnet sind, welche eingerichtet sind, Position eines Sensors in einer Sensoraufnahme zu signalisieren, wenn die TAG-Nr. dieses Sensors angefragt wird.

## Claims

1. Transport box (8) for transporting a range of Memosens sensors to measuring points, wherein each Memosens sensor has an individual tag number, wherein the transport box comprises:
an energy storage system;
a near-field communication interface;
a range of ordered sensor holders with inductive interfaces to one specific Memosens sensor;
a microprocessor to control communication with the individual interfaces and the near-field communication interface, wherein
the transport box is set up to identify the position of a Memosens sensor in the transport box if the TAG number of this sensor is requested, and to signal the identified position and/or report it via the near-field communication interface.

2. Transport box as claimed in Claim 1, wherein light-emitting diodes are assigned to the sensor holders, or to the rows and gaps of sensor holders in the event of a matrix-like sensor holder arrangement, said light-emitting diodes being set up to signal the position of a sensor in a sensor holder if the TAG number of this sensor is requested.

## Revendications

1. Boîte de transport (8) destinée au transport d'un grand nombre de capteurs Memosens sur les points de mesure, les capteurs Memosens portant chacun des numéros de tag individuels, la boîte de transport comprenant :
un accumulateur d'énergie,
une interface radio courte distance,
un grand nombre de logements de capteur ordonnés avec des interfaces inductives avec respectivement un capteur Memosens,
un microprocesseur destiné à la commande de la communication avec les différentes interfaces et l'interface radio courte distance,
la boîte de transport étant configurée de telle manière à identifier un capteur Memosens installé dans la boîte de transport lorsque le n° de TAG de ce capteur est interrogé, et à signaler et/ou communiquer par le biais de l'interface radio courte distance la position identifiée.

2. Boîte de transport selon la revendication 1, pour laquelle sont attribuées, aux logements de capteur ou, en cas de disposition en forme de matrice des logements de capteur, aux rangées et aux colonnes de logements de capteur, des diodes électroluminescentes, lesquelles sont configurées de manière à signaler la position d'un capteur dans un logement de capteur lorsque le n° TAG de ce capteur est interrogé.
